(19) Europäisches Patentamt
European Patent Office
Office européen des brevets

(11) Publication number: **0 101 099**
**B1**

(12) # EUROPEAN PATENT SPECIFICATION

(45) Date of publication of patent specification: **30.12.86**

(51) Int. Cl.4: **C 01 B 33/32**, C 11 D 3/08, C 11 D 11/00

(21) Application number: **83200818.9**

(22) Date of filing: **06.06.83**

(54) **Process for making a surface-modified, granulated alkali metal metasilicate pentahydrate, and use thereof.**

(30) Priority: **09.07.82 SE 8204253**

(43) Date of publication of application:
**22.02.84 Bulletin 84/08**

(45) Publication of the grant of the patent:
**30.12.86 Bulletin 86/52**

(84) Designated Contracting States:
**BE DE FR GB NL**

(56) References cited:
**DE-A-2 744 753**
**DE-B-1 567 573**
**DE-B-2 806 161**
**US-A-3 208 822**
**US-A-3 748 103**
**US-A-3 884 645**

(73) Proprietor: **Eka Nobel Aktiebolag**
**S-445 01 Surte (SE)**

(72) Inventor: **Holmberg, Krister**
**Dalgangsgatan 17**
**S-431 39 Mölndal (SE)**

(74) Representative: **Wiklund, Erik et al**
**AWAPATENT AB Box 5117**
**S-200 71 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for making a surface-modified, granulated alkali metal metasilicate pentahydrate, and the use of said surface-modified granulate in, for instance, dishwashing and detergent compositions.

Sodium metasilicate is an important ingredient in many industrial detergents and in practically all machine dishwashing detergents. Machine dishwashing detergents contain typically, in addition to alkali metal metasilicate, also alkali metal phosphate, tenside and organic chlorine compound. Furthermore, varying amounts of alkali metal carbonates and bicarbonates, corrosion inhibitors, dyes and perfume are frequently included.

The alkali metal phosphate, usually sodium tripolyphosphate, primarily serves as a complexing agent for calcium and magnesium ions.

The tenside usually is a low-foaming nonionic tenside, preferably a block polymer of ethylene and propylene oxide. Its task is to contribute to wetting and emulsification, simultaneously as it shall have an anti-foaming effect on, for example, proteins.

The organic chlorine compound functions as an oxidative bleaching agent which has the task of attacking deposits of inter alia coffee, tea and fruit juices. When the compound comes into contact with water, it gives off chlorine which acts not only as a bleaching agent but also as a disinfectant. In most cases, salts of dichloroisocyanuric acid are used as the organic chlorine compound, and the sodium salt has, primarily for economical reasons, been most widely utilized.

The alkali metal silicate normally is a sodium silicate having a molar ratio $SiO_2$:$Na_2O$ of between 3.50 and 0.75. Usually, use is made of so-called sodium metasilicate, which implies that the said ratio is 1. The purpose of the silicate is to provide a high pH which is needed inter alia for hydrolysis of edible fat rests, and to have a corrosion-inhibiting effect.

The sodium metasilicate may be either practically anhydrous or be present as a hydrate. There are four known hydrates ($SiO_2 \cdot Na_2O \cdot nH_2O$, n=5, 6, 8, 9). The commercially most widely used hydrate is the crystal form called pentahydrate. This product is usually written as $SiO_2 \cdot Na_2O \cdot 5H_2O$, but X-ray diffraction has shown that this crystal form actually is a tetrahydrate of a di- anion. Its true formula is

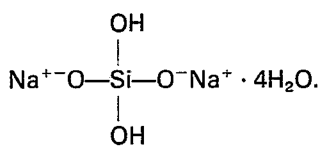

The term "pentahydrate" thus actually is not correct, but still is the prevalent name by which the product is known.

Machine dishwashing detergents traditionally employ anhydrous metasilicate because of its higher chemical stability. Thus, anhydrous metasilicate contributes to maintaining a substantially moisture-free atmosphere in the detergent or dishwashing composition in which it is included, and this is an important factor in preventing the organic chlorine compound from being decomposed and prematurely giving off chlorine, i.e. before the contemplated use of the composition.

A typical machine dishwashing composition based on anhydrous metasilicate contains the following:

| | |
|---|---|
| metasilicate, anhydrous | 30—40% by weight |
| sodium tripolyphosphate | 45—55% by weight |
| sodium dichloroisocyanurate | 1—3% by weight |
| nonionic tenside | 1—3% by weight |
| soda | 5—15% by weight |

Also other components, such as glass corrosion inhibiting agents, may be included in the formulation.

The production of the metasilicate pentahydrate is far cheaper than that of the anhydrous product, and it would be economically advantageous to use metasilicate pentahydrate instead of the anhydrous product in machine dishwashing detergents and industrial detergents. However, use of the pentahydrate is unacceptable if, at the same time, it causes an excessive decomposition of the chlorine compound before the dishwashing detergent is used.

In recent years, granulated metasilicate pentahydrate grades have been developed which have shown a low tendency towards giving off their hydrate water. Presumably, this is due to the high mechanical stability of these granules, as a result of which they are worn down but to an insignificant extent during handling. Thus, it will be appreciated that the specific surface area of a product sensitive to wear will

increase very rapidly, concurrently with the growth of a powder fraction, and this in turn causes a much increased risk of contact between the chlorine compound and the surface of the metasilicate.

A typical machine dishwashing formulation based on metasilicate pentahydrate has the following composition:

| | |
|---|---|
| sodium tripolyphosphate | 35—45% by weight |
| sodium metasilicate pentahydrate | 50—60% by weight |
| sodium dichloroisocyanurate | 1—3% by weight |
| nonionic tenside | 1—3% by weight |

However, also a high-grade metasilicate pentahydrate causes a deterioration in the chlorine stability of the machine dishwashing detergent, as compared with the use of anhydrous metasilicate. It has been tried in different ways to cope with this problem, and it has been found that, inter alia, a surface treatment of the chlorine compound with a hydrophobic ester has a satisfactory effect (see the European patent application 54094).

The present invention has for its object to provide a surface-modified, granulated metasilicate pentahydrate having reduced tendency to giving off water, thereby increasing the chlorine stability of dishwashing and other detergents containing this product.

It has been found, in the context of this invention, that a high proportion of material having a water content below 5 moles per mole of $SiO_2$ in the surface of the granules gives a product which contributes to excellent chlorine stability in compositions for machine dishwashing detergents and industrial detergents. The improved chlorine stability presumably is due to the fact that the surface-modified metasilicate granules have a very low tendency towards giving off water, thereby reducing the risk that the labile chlorine compound comes into contact with a moist metasilicate surface. The modified surface layer of the granules, which is amorphous, shall have at least such an extent that the surface of the granule is covered, while the thickness of the surface layer is less critical.

The characteristic features of the invention will be apparent from the appended claims.

The surface modification of the metasilicate pentahydrate granules is carried out by the following method:

The granules are heated for a short period of time to a temperature at which a dehydration and polymerisation occurs in the surface, whereupon the granules are quickly cooled to room temperature. A suitable surface temperature of the granules during heating is 60—80°C, and a suitable period of time is 1—20 seconds. A lower temperature requires a longer heating period, and vice versa.

The invention will be further illustrated by the following nonrestrictive Examples.

Example 1

Granules of sodium metasilicate pentahydrate having a mean diameter of 0.5—1.0 mm were heated immediately after production to 70°C for 10 seconds by means of a hot air stream. The granules were then cooled with air of room temperature. Heating and cooling were both carried out in a rotary drum. After the treatment, the granules were screened in conventional manner and conveyed to storage silos.

Example 2

Two different machine dishwashing detergents based on metasilicate pentahydrate granules modified in accordance with Example 1, and unmodified metasilicate pentahydrate granules (reference) were tested with respect to their chlorine stability. The machine dishwashing detergents which differed from one another merely in respect of the type of metasilicate, had the following composition:

| | |
|---|---|
| sodium tripolyphosphate | 41% by weight |
| sodium metasilicate pentahydrate | 55% by weight |
| sodium dichloroisocyanurate | 2% by weight |
| nonionic tenside | 2% by weight |

The detergents were packed in cardboard cartons and left for 4 months at 30°C and a relative humidity of 85%. After each month, samples were taken from which the chlorine content was determined. The result, expressed as chlorine decomposition in per cent, will appear from Table 1 and the enclosed diagram. As can be seen, the surface-modified metasilicates according to the present invention impart a decidedly higher chlorine stability to the machine dishwashing detergent.

TABLE 1

| | Chlorine decomposition (%) 1 month | 2 months | 3 months | 4 months |
|---|---|---|---|---|
| Machine dishwashing detergent according to Example 1 | 5 | 7 | 13 | 15 |
| Reference | 15 | 22 | 27 | 36 |

**Claims**

1. Process for making a surface-modified, granulated alkali metal metasilicate pentahydrate, characterised by heating alkali metal metasilicate pentahydrate granules at a temperature of 60—80°C for 1—20 seconds; whereby an amorphous surface layer having a water content below 5 moles per mole of $SiO_2$ is formed.

2. Process as claimed in claim 1, characterised in that the alkali metal is sodium.

3. Use of a surface-modified, granulated alkali metal metasilicate pentahydrate prepared in accordance with claim 1, in dishwashing and other detergent compositions.

**Patentansprüche**

1. Verfahren zur Herstellung von oberflächenbehandeltem, granuliertem Alkalimetall-Metasilicat-Pentahydrat, dadurch gekennzeichnet, dass Alkalimetall-Metasilicat-Pentahydrat-Körner während 1—20 sek bei einer Temperatur von 60—80°C erhitzt werden, wodurch eine amorphe Oberflächenschicht mit einem Wassergehalt von weniger als 5 Mol pro Mol $SiO_2$ gebildet wird.

2. Verfahren gemäss Anspruch 1, dadurch gekennzeichnet, dass das Alkalimetall Natrium ist.

3. Verwendung eines gemäss Anspruch 1 hergestellten, oberflächenbehandelten, granulierten Alkalimetall-Metasilicat-Pentahydrats in Geschirrspül- und anderen Reinigungskompositionen.

**Revendications**

1. Procédé de préparation d'un métasilicate de métal alcalin pentahydraté granuleux modifié en surface, caractérisé en ce que l'on chauffe les granules du métasilicate de métal alcalin pentahydraté à une température de 60 à 80°C pendant une durée de 1 à 20 secondes, ce qui conduit à la formation d'une couche de surface amorphe ayant une teneur en humidité inférieure à 5 moles par mole de $SiO_2$.

2. Procédé selon la revendication 1, caractérisé en ce que le métal alcalin est le sodium.

3. Utilisation d'un métasilicate de métal alcalin pentahydraté granuleux modifié en surface préparé par le procédé selon la revendication 1, dans des compositions pour le lavage de la vaisselle et d'autres compositions détergentes.

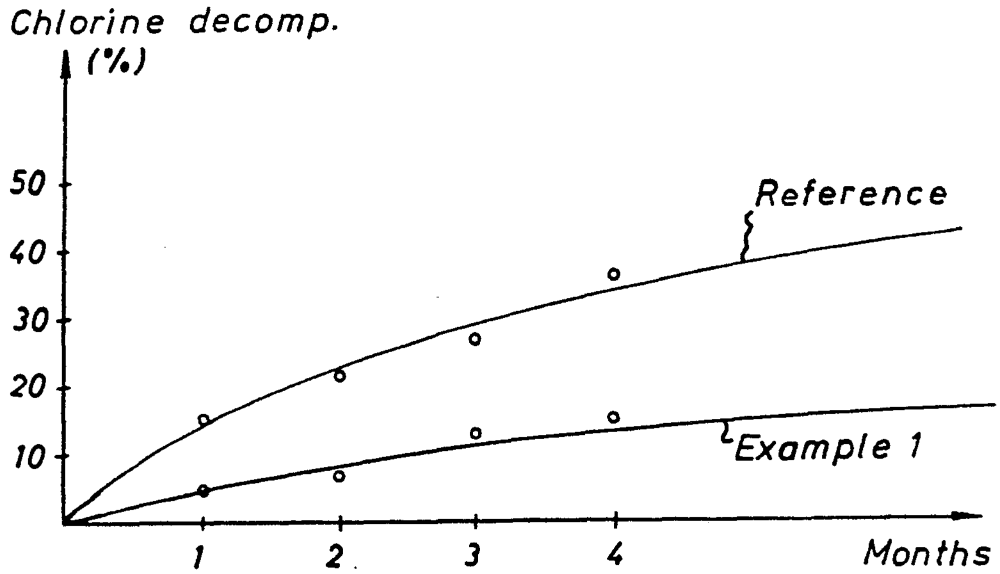
Chlorine decomp.
(%)
50
40
30
20
10
Reference
Example 1
1
2
3
4
Months